# EUROPÄISCHE PATENTSCHRIFT

(11) **EP 1 159 866 B1**
(45) Veröffentlichungstag und Bekanntmachung des Hinweises auf die Patenterteilung: **21.07.2004**
(21) Anmeldenummer: 01110996.4
(22) Anmeldetag: 07.05.2001
(51) Int. Cl.: A01D 34/86

(54) **Mähgerät mit zwei Mähköpfen**
Mowing implement with two mower heads
Appareil faucheur à deux têtes de coupe

(30) Priorität: 31.05.2000 DE 10027133
(43) Veröffentlichungstag der Anmeldung: 05.12.2001
(73) Patentinhaber: MULAG-FAHRZEUGWERK Heinz Wössner GmbH & CO KG, D-77740 Bad Peterstal-Griesbach (DE)
(72) Erfinder: Spinner, Frank, 77728 Oppenau (DE)
(74) Vertreter: Strych, Werner Maximilian Josef, Dr.

(56) Entgegenhaltungen:
- DE-A- 3 318 342
- DE-A- 19 611 281
- DE-C- 4 408 750
- DE-U- 20 003 154
- DE-U- 29 909 876
- GB-A- 2 180 133
- US-A- 4 697 405
- US-A- 5 392 593

## Beschreibung

### I. Anwendungsgebiet

Die Erfindung betrifft ein Randstreifen-Arbeitsgerät, wie es mit unterschiedlichen Arbeitsköpfen, beispielsweise Mähköpfen, zur Durchführung unterschiedlicher Randstreifen-Arbeiten, ausgestattet sein kann.

### II. Technischer Hintergrund

Derartige Randstreifen-Arbeitsgeräte, im folgenden aus Vereinfachungsgründen prinzipiell Randstreifen-Mähgeräte genannt, werden an Arbeitsfahrzeugen, die insbesondere eine hinter der Fahrerkabine angeordnete Ladefläche aufweisen, angeordnet und arbeiten in der Arbeitsposition seitlich versetzt zum Arbeitsfahrzeug, so dass dieses entlang der Straße oder des Weges fahren kann, während der Randstreifen neben der Straße bearbeitet bzw. gemäht wird.

Im Sinne der Kosteneinsparung wird dabei angestrebt, dass das Mähen des Randstreifens mit nur einem Bediener erfolgen kann, der also gleichzeitig das Arbeitsfahrzeug fährt und die noch notwendige zusätzliche Steuerung des Mähgerätes gleichzeitig vornehmen kann. Dies ist nur möglich, wenn diese zusätzlichen Steuerungsmaßnahmen auf das geringstmögliche Maß beschränkt sind bzw. die Steuerung des Mähgerätes möglichst vollautomatisch erfolgt, da nur dann hohe Fahrgeschwindigkeiten während des Arbeitseinsatzes und damit hohe Arbeitsleistungen erzielbar sind.

In diesem Sinne ist eine gute Sicht des Bedieners von seinem Fahrerplatz aus auf die in Arbeitsposition befindlichen Mähköpfe notwendig.

Aus diesem Grund sind - neben den früher auf den Arbeitsflächen angeordneten Auslegerarmen, welche den Mähkopf tragen und die damit jedoch seitlich oder gar hinter der Fahrerposition arbeiten - in letzter Zeit vermehrt die mittels eines Frontrahmens vor der Front des Arbeitsfahrzeuges befestigten Mähgeräte im Einsatz, da deren Arbeitsposition in Fahrtrichtung vor dem Fahrzeug und damit im Sichtbereich des Fahrers liegen.

Ein typisches Problem ist das Mähen von Randstreifen von Straßen, in denen im Abstand ja auch die Straßen-Begrenzungspfosten angeordnet sind.

Beim Mähen eines solchen Randstreifens mit nur einem Mähkopf ist das Mähen des gesamten Randstreifens in einem einzigen Arbeitsgang in der Regel nicht möglich. Stattdessen muss in einem ersten Arbeitsgang der Bereich zwischen Straßenaußenkante und den Straßen-Begrenzungspfosten gemäht werden, und in einem zweiten Arbeitsgang der Randbereich außerhalb der Straßen-Begrenzungspfosten, wobei bei wenigstens einem der Arbeitsgänge der - in Fahrtrichtung betrachtet - Breitenbereich unmittelbar zwischen den Straßen-Begrenzungspfosten ebenfalls gemäht werden muss, indem mit dem Arbeitskopf in Fahrtrichtung bis an den Begrenzungspfosten herangefahren, und anschließend der Mähkopf so verlagert wird, dass der Begrenzungspfosten umlaufen wird. Auch dies geschieht in der Regel automatisch, sollte jedoch mit möglichst hoher Fahrgeschwindigkeit möglich sein.

In diesem Zusammenhang sind bereits Randstreifen-Mähgeräte mit zwei Mähköpfen bekannt, die seitlich und in Fahrtrichtung zueinander versetzt gleichzeitig beide Bereiche, also innerhalb und außerhalb der Straßen-Begrenzungspfosten, in einem einzigen Arbeitsgang mähen. Ein solches Arbeitsgerät ist von der Firma Gerhard Dücker GmbH & Co. KG, Stadtlohn, bekannt. Dabei ist ebenfalls an einem Frontrahmen einerseits ein in Arbeitsposition vorne, zur Straße nächstliegenden Randbereich bearbeitender erster Mähkopf und ein dahinter, jedoch seitlich weiter außen überlappend arbeitender zweiter Mähkopf vorhanden, die jeweils über separate Auslegerarme, die am Frontrahmen befestigt sind, angeordnet sind.

Nachteilig ist dabei jedoch, dass in der Transportstellung beide Mähköpfe vor den Frontrahmen geklappt werden, wobei z. B. der außen arbeitende Mähkopf quer zur Fahrtrichtung vor dem Frontrahmen sitzt, und der weiter innen arbeitenden Mähkopf daran mittels einer Halterung angeordnet ist.

Dies ist nachteilig, da aufgrund des relativ hohen Gewichts der Mähköpfe der Schwerpunkt des Mähgerätes in Transportstellung weit vor der Koppelebene mit dem Arbeitsfahrzeug liegt.

Dies bedingt für das Arbeitsfahrzeug insgesamt eine sehr nachteilige Gewichtsverteilung, erfordert ein hohes Eigengewicht des Arbeitsfahrzeuges und eine hohe Gegenballastierung am Heck des Arbeitsfahrzeuges.

Ein Arbeitsfahrzeug gemäß dem Oberbegriff des Anspruches 1 ist aus DE-29909876U bekannt.

### III. Darstellung der Erfindung

### a) Technische Aufgabe

Es ist daher die Aufgabe der vorliegenden Erfindung, ein Randstreifen-Mähgerät mit zwei Mähköpfen zu schaffen, welches trotz guter Sicht auf die Arbeitsstellung in Transportstellung eine günstige Schwerpunktverteilung sowie gute Übersichtlichkeit und Manövrierfähigkeit des Arbeitsfahrzeuges ergibt.

### b) Lösung der Aufgabe

Diese Aufgabe ist durch die Merkmale des Anspruches 1 gelöst. Vorteilhafte Ausführungsformen ergeben sich aus den Unteransprüchen.

Der Breitenbereich zwischen dem Rand der Fahrbahn und den Straßenleitpfosten ist in aller Regel geringer als der zu mähende Breitenbereich außerhalb der Begrenzungspfosten. Zusätzlich ist dort der Bewuchs leichter zu mähen, da er in der Regel nur aus Gras oder Unkraut besteht, während im Außenbereich auch Gestrüpp und Hindernisse aus festem Material stehen. Aus diesem Grund, und weil der weiter innen arbeitende Mähkopf auch unter Leitplanken eingesetzt werden soll, ist beim inneren Mähkopf eine geringe Gehäusehöhe einerseits notwendig und andererseits wegen des darin unterzubringenden Mähwerkes mit geringerem Durchmesser auch möglich.

Der weiter innen arbeitende Mähkopf ist in der Regel von geringerem Gewicht als der äußere Mähkopf.

Zusätzlich ist aufgrund der weiter außen liegenden Arbeitsstellung des äußeren Mähkopfes auch dessen Auslegerarm umfangreicher und schwerer.

Durch Ablage dieses äußeren Mähkopfes in der Transportstellung auf der Ladefläche hinter der Fahrerkabine wird ein Großteil des Gesamtgewichts des Mähgerätes in Transportstellung vom Frontrahmen auf die Ladefläche verlagert (egal ob beide Mähköpfe oder nur der eine am Frontrahmen des Mähgerätes, der andere z. B. auf der hinteren Ladefläche befestigt sind), wobei dort insbesondere per vorher eingegebener Transportstellung sogar Seitenlage und Längsposition der Ablagestelle auf der Ladefläche bestimmt werden kann, u. a. zwecks Freihaltung von definierten Ladeflächen für andere Aggregate.

Dies ergibt den weiteren Vorteil, dass die gesamte Fahrzeugbreite für die Anordnung des anderen, weiter innen arbeitenden Mähkopfes in Transportstellung zur Verfügung steht und dadurch auch die Gesamtauskragung nach vorne in Transportstellung verringert wird und damit die Übersichtlichkeit und Manövrierfähigkeit des Fahrzeuges verbessert.

Zusätzlich wird aus denselben Gründen für diesen innen arbeitenden Mähkopf anstelle der üblichen Schlagmesserwelle oder Mähwerkswelle ein Mähelement gewählt, welches eine kleine und leichte Ausbildung dieses Mähkopfes ermöglicht. Insbesondere wird als Mähelement eine mit insbesondere Einzelmessern ausgestattete und insbesondere sehr schnell laufende Messerwelle gewählt, die nur geringen Durchmesser - in Richtung der Mähwelle und damit quer zur Fahrtrichtung betrachtet - aufweist und dadurch auch ein kleines Gehäuse und geringes Gesamtgewicht ermöglicht.

Dadurch ist die Anlenkung dieses leichten, innen arbeitenden Mähkopfes auch an nur einer Seite, nämlich dem fahrzeugseitigen, in der Regel linken, Ende des Mähkopfgehäuses am zugeordneten Auslegerarm möglich. Bei Anordnung des Auslegerarmes am äußeren, also rechten, Ende des Frontrahmens verläuft dieser Auslegerarm in Arbeitsposition fast parallel zur Fahrtrichtung steil schräg nach vorne und kann daher - da er die Begrenzungspfosten nicht oben übergreifen muss - relativ einfach und leicht ausgebildet werden, insbesondere ist die Ausstattung mit einem teleskopierbaren oder parallelogrammartigen mittleren Abschnitt möglich, der in Arbeitsstellung ausgefahren wird, um diesen innen arbeitenden Mähkopf ausreichend weit nach vome vor den Frontrahmen zu bringen.

Dies ergibt den Vorteil, dass durch Verschwenken des Arbeitskopfes beim Anlaufen an ein Hindernis, beispielsweise einen Begrenzungspfosten, ein Verschwenken um den Anlenkpunkt am Ausleger um eine im wesentlichen vertikale Achse nach hinten möglich ist, bedingt durch eine Taststange, die quer vor dem Gehäuse dieses Mähkopfes das Hindernis ertastet und dadurch automatisch und ohne Fahrtunterbrechung ein Umfahren des Begrenzungspfostens durch den vorderen Mähkopf bei hoher Fahrgeschwindigkeit ermöglicht wird.

Aufgrund des großen Abstandes in Längsrichtung dieses vorderen Mähkopfes vor dem Frontrahmen ist trotz des Verschwenkens beim Hindernisumfahren nach hinten der in Querrichtung überlappend positionierte hintere Mähkopf dennoch vor dem Frontrahmen und damit im Sichtbereich des Fahrers positioniert, ohne beim Verschwenken des vorderen Mähkopfes mit diesem zu kollidieren. Insbesondere kann zu diesem Zweck - und um die Auskragungslänge des Auslegerarmes für den innen arbeitenden Arbeitskopf nach vorne möglichst zu reduzieren - der weiter außen arbeitende Mähkopf entweder grundsätzlich in Schrägstellung beim Arbeiten gehalten werden, also mit dem äußeren Ende weiter vom und dem inneren Ende weiter hinten, oder in diese Schrägstellung immer dann automatisch verschwenkt werden, wenn der innen arbeitende und weiter vorne befindliche Mähkopf zwecks Umfahren eines Hindernisses seine Schwenkbewegung nach hinten vollzieht.

Der äußere Mähkopf ist aufgrund seiner größeren Mähbreite und des größeren Abstandes zur Fahrbahn und damit anderen Fahrzeugen - welches eine geringere Steinschlaggefahr gegen diese Fahrzeuge ergibt - mit einem konventionellen Mähwerk bzw. Schlegelmähwerk ausgestattet und der Auslegerarm greift am Gehäuse dieses äußeren Mähkopfes vorzugsweise in dessen Mitte - in Querrichtung betrachtet- , vorzugsweise nur in dessen Mitte, an, um eine bessere Gewichtsverteilung am Auslegerarm zu erreichen.

Während der innen arbeitende Mähkopf am Frontrahmen, insbesondere dessen vorne am Frontrahmen befestigte Versatzschiene, fest am äußersten Punkt angeordnet ist, ist der Auslegerarm des äußeren Mähkopfes quer verschiebbar an der Versatzschiene angeordnet, um die Gewichtsbelastungen durch die beiden Mähköpfe nicht auf derselben Seite am Fahrzeug angreifen zu lassen. Dabei wird der Auslegerarm für den äußeren Mähkopf primär im dem Seitenstreifen abgewandten, also in der Regel linken oder mittleren, Bereich positioniert sein und in der Transportposition, also bei auf der Ladefläche abgelegtem äußerem Mähkopf, zur Sichtverbesserung des Fahrers in der Mitte an der Versatzschiene positioniert werden.

Um dem Fahrer des Arbeitsfahrzeuges zusätzlich zum Fahren des Fahrzeuges möglichst wenige Steuerungsfunktionen für das Mähgerät aufzuerlegen, wird dieses in der Regel - wobei auf Wunsch auf Handschaltung umgeschaltet werden kann - weitestgehend von einer bzw. zwei getrennten elektronischen Steuerungen gesteuert, die beide Mähköpfe gleichzeitig steuert, und zwar hinsichtlich z. B. der Höhenlage, Schräglage in Fahrtrichtung gesehen als auch hinsichtlich ihres Seitenabstandes zum Frontrahmen, und hinsichtlich ihrer Winkellage in der Aufsicht betrachtet.

Die Umschaltung auf separate Steuerung, auch separate manuelle Ansteuerung, der beiden Mähköpfe ist jederzeit möglich.

Durch Verwendung zweier getrennter elektronischer Steuerungen für die beiden Mähköpfe, insbesondere auch zweier getrennter Steuerungselemente (Steuerknüppel) für die beiden Mähköpfe, ist es insbesondere möglich, die beiden Mähköpfe separat einzeln einzusetzen, und dabei den nicht benötigten jeweils anderen Mähkopf in der Transportstellung zu belassen, während mit dem im Einsatz befindlichen Mähkopf gearbeitet wird.

Die vorbeschriebene Folgesteuer, also das Steuern des zweiten und jedes weitem Mähkopfes relativ zum ersten Mähkopf, so daß der Fahrer nur den ersten Mähkopf hinsichtlich Seitenabstand zum Fahrzeug und gegebenenfalls Höhenlage und Neigung steuert als auch die Möglichkeit der Umschaltung auf separate Steuerung der einzelnen Mähköpfe mit einzelnen Steuerelementen (Steuerknüppel) ist auch dann gegeben, wenn nicht nur zwei sondern sogar drei separate Mähköpfe vorhanden sind:

Der dritte Mähkopf ist wie die beiden anderen ebenfalls an einem separaten Auslegerarm angeordnet und arbeiten in der Regel am weitesten außen, so daß hierdurch insgesamt die Arbeitsbreite des Gerätes vergrößert wird. Der äußerste Mähkopf ist dabei in der Regel identisch mit dem dann mittleren Mähkopf, und auch die Auslegerarme dieser Mähköpfe ähneln sich stark oder sind gar identisch, bis auf die größere Länge der Ausleger-Armteile beim dritten und am weitesten außen arbeitenden Mähkopf.

Allerdings ist der dritte Mähkopf nicht im Frontbereich des Basisfahrzeuges, sondern in dessen Heckbereich, also entweder auf dessen Ladefläche oder hinter dessen Ladefläche, zum Beispiel an einer Heckschiene, angeordnet, und dabei vorzugsweise auf einer Schiebebasis befestigt, die in Querrichtung entlang einer Heck-Versatzschiene verschiebbar ist.

Dies dient einerseits dazu, um während des Arbeitseinsatzes durch Gewichtsverlagerung eine einigermaßen gleichmäßige Auslastung des Fahrzeuges zu erreichen, und ist vor allem für die Ablage dieses dritten Mähkopfes in der Transportstellung notwendig:

Dabei wird dieser dritte Mähkopf bei eingefalteter Auslegerarm über bzw. auf der Ladefläche in Längsrichtung abgelegt, und zwar im Seitenbereich neben dem Auslegerarm, der zu diesem Zweck aus der in Längsrichtung verlaufenden Mittenstellung etwas außermittig, also vom abgelegten Mähkopf weg, verlagert wird, um das Gewicht auf der Ladefläche gleichmäßig zu verteilen.

Da hierdurch der bei nur zwei Mähköpfen für das Ablegen des zweiten Mähkopfes vorgesehene Raum auf der Ladefläche nicht mehr vorhanden ist, wird der zweite Mähkopf im Höhenabstand oberhalb der Ladefläche in der Transportstellung belassen, in dem dessen Auslegerarm auf einer quer über dem vorderen Ende der Ladefläche, also über dem hinteren Ende der Fahrerkabine oder über der Fahrerkabine verlaufend, abgelegt wird.

### c) Ausführungsbeispiele

Eine Ausführungsform gemäß der Erfindung ist im folgenden anhand der Figuren beispielhaft näher beschrieben. Es zeigen:
- Fig. 1a, 1b: das Randstreifenmähgerät mit zwei Mähköpfen beim Mähen in Aufsicht und Frontansicht und
- Fig. 2a, 2b: das Arbeitsgerät in Transportstellung der Fig. 1 in der Seitenansicht und Aufsicht.
- Fig. 3a, 3b: ein Arbeitsfahrzeug mit drei Mähköpfen in Arbeitsstellung in der Aufsicht und Frontansicht.
- Fig. 4a, 4b: das Arbeitsgerät gemäß Fig. 3 in der Transportstellung in Aufsicht und Seitenansicht.

Wie die Figuren zeigen, ist als Trägerfahrzeug ein Arbeitsfahrzeug 7 verwendet, welches hinter der Fahrerkabine 6 eine Ladefläche 5 aufweist. An bzw. vor der vorderen Stoßstange 24, oder auch anstelle dieser Stoßstange 24 ist ein Frontrahmen 8 montiert, an dem zwei Auslegerarme 3, 4 für den inneren Mähkopf 2a bzw. äußeren Mähkopf 2b befestigt sind.

Der Auslegerarm 3 für den inneren Mähkopf 2a ist dabei fest am äußersten Punkt 23 der rechten Seite der Versatzschiene 11, die das vordere Ende des Frontrahmens 8 bildet, unverschiebbar entlang der Versatzschiene 11 befestigt. Ein Ummontieren von der linken zur rechten Seite der Versatzschiene 11 ist jedoch in aller Regel möglich. Der Auslegerarm 3 ist bzgl. des Befestigungspunktes am Frontrahmen 8 sowohl in der Horizontalen als auch in der Vertikalen verschwenkbar, weist einen mittleren parallelogrammartigen oder teleskopierbaren Abschnitt 17 auf, und ausreichend Gelenkstellen, um den am freien Ende des Auslegerarmes 3 befestigten inneren Mähkopf 2a in die gewünschte Position und Winkellage bzgl. des Arbeitsfahrzeuges 7 zu bringen und zu halten. Die Betätigung des Auslegerarmes und vorzugsweise auch der Mähwelle der Arbeitsköpfe geschieht vorzugsweise hydraulisch.

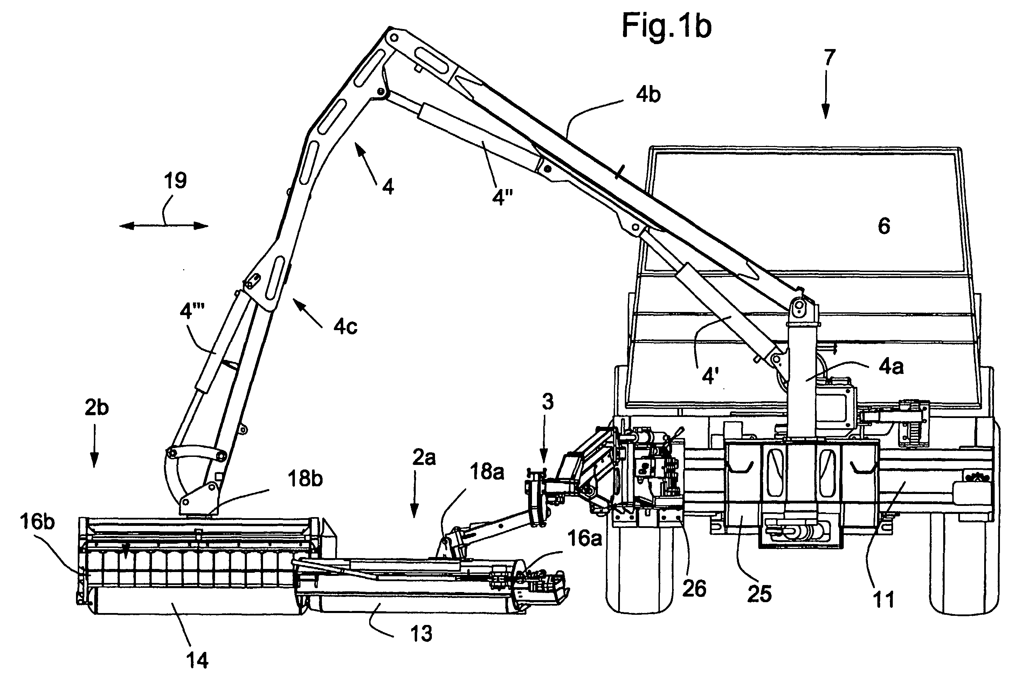

Wie besser in der Frontansicht der Fig. 1b zu erkennen, weist der innere, also bzgl. der Straße 20 und damit des Arbeitsfahrzeuges 7 näher neben der Seitenkante des Arbeitsfahrzeuges bzw. der Straße arbeitende, Mähkopf 2a einen wesentlich geringeren Durchmesser auf, beispielsweise aufgrund anderer Mähtechnik, als die Mähwelle 16b des anderen Mähkopfes 2b. Entsprechend ist auch der Durchmesser der beiden Mähkopfgehäuse unterschiedlich. Dies bewirkt insgesamt - bei gleicher Mähbreite - ein geringeres Gewicht des Mähkopfes 2a gegenüber demjenigen des Mähkopfes 2b, und wegen der beim Mähkopf 2b wesentlich größeren seitlichen Auskragung auch eine entsprechend größere schwerere und stabilere Konstruktion des Auslegerarmes 4 für den äußeren Mähkopf 2b, sowohl hinsichtlich der einzelnen Segmente, also Turm 4a, erstes Segment 4b, zweites, insbesondere teleskopierbares Segment 4c und die zugehörigen Hydraulikzylinder 4', 4" und 4"'.

Im Gegensatz zum Auslegerarm 3 für den inneren Mähkopf 2a ist der Auslegerarm 4 für den äußeren Mähkopf 2b entlang der Versatzschiene 11 des Frontrahmens 8 in Querrichtung 19 verfahrbar.

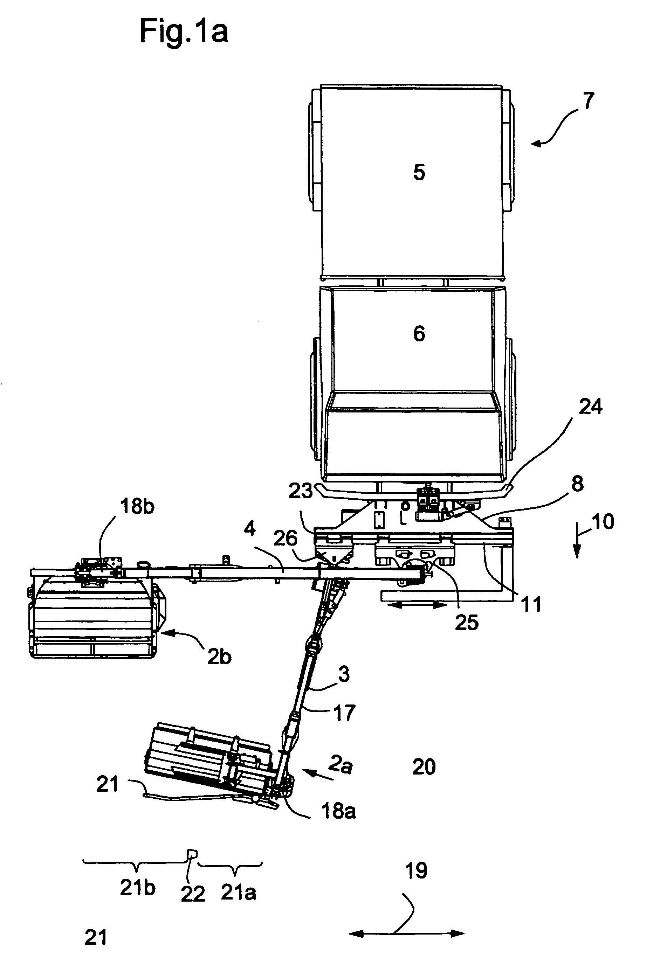

Wie die Aufsicht der Figur 1a zeigt, sind die Arbeitsköpfe 2a, 2b in der Arbeitsstellung so positioniert, dass der äußere Arbeitskopf 2b sich noch vor dem Frontrahmen 8, zumindest jedoch noch vor der Fahrerkabine 6 des Arbeitsfahrzeuges 7 befindet, vorzugsweise mit einem genau im rechten Winkel zur Fahrtrichtung 10 in der Aufsicht verlaufenden Auslegerarm 4.

Der seitliche Versatz des äußeren Mähkopfes 2b ist so eingestellt, dass die zum Arbeitsfahrzeug 7 hinweisende, in der Regel linke Außenkante des Mähkopfes 2b gerade noch außerhalb der Straßen-Begrenzungspfosten 22 vorbei fahren kann, wenn das Arbeitsfahrzeug 7 exakt am Rand der Straße 20 oder in einem vorbestimmten Abstand zum Rand der Straße 20 gesteuert wird.

Demgegenüber ist der innere Mähkopf 2a so eingestellt, dass er sich in Längsrichtung vor dem äußeren Mähkopf 2b befindet, wobei der Seitenversatz so eingestellt ist, dass der Bereich zwischen dem Rand der Straße 20 und dem inneren, also linken, Rand des Mähbereiches des äußere Mähkopfes 2b vollständig abgedeckt wird.

Die Höhensteuerung und Winkelstellung bzgl. der Horizontalen wird dadurch gesteuert, dass beide Mähköpfe 2a, 2b über eine Abtastwalze 13 bzw. 14, vorzugsweise am hinteren Ende des jeweiligen Mähkopfes, verfügen, die den Kontakt mit dem Untergrund steuern kann.

In der Arbeitsstellung ist der vordere Mähkopf 2a bevorzugt leicht schräg, also nicht exakt rechtwinklig zur Fahrrichtung 10, eingestellt, so dass das außen liegende Ende in Fahrtrichtung etwas weiter hinten liegt als das innen liegende Ende, an welchem der Auslegerarm 3 angreift. Der innere Mähkopf 2a verfügt über die bekannte Taststange 12, die vor der Vorderkante des Mähkopfes schwenkbar nahe des inneren, linken Endes befestigt ist, und das Erreichen eines Hindernisses, beispielsweise der in Fahrtrichtung hinten liegenden Kante eines Begrenzungspfosten 22, registriert. Durch Betätigung der Taststange 12 wird ein zunehmendes Einklappen des Mähkopfes 2a um den Anlenkpunkt 18 am Auslegerarm 3 bewirkt, bis das Hindernis die Taststange 12 nicht mehr betätigt, also der Mähkopf 2a auf der Straßenseite das Hindernis, beispielsweise den Begrenzungspfosten 22, passieren kann. Unmittelbar anschließend klappt der Mähkopf 2a wieder in seine Arbeitsstellung zurück.

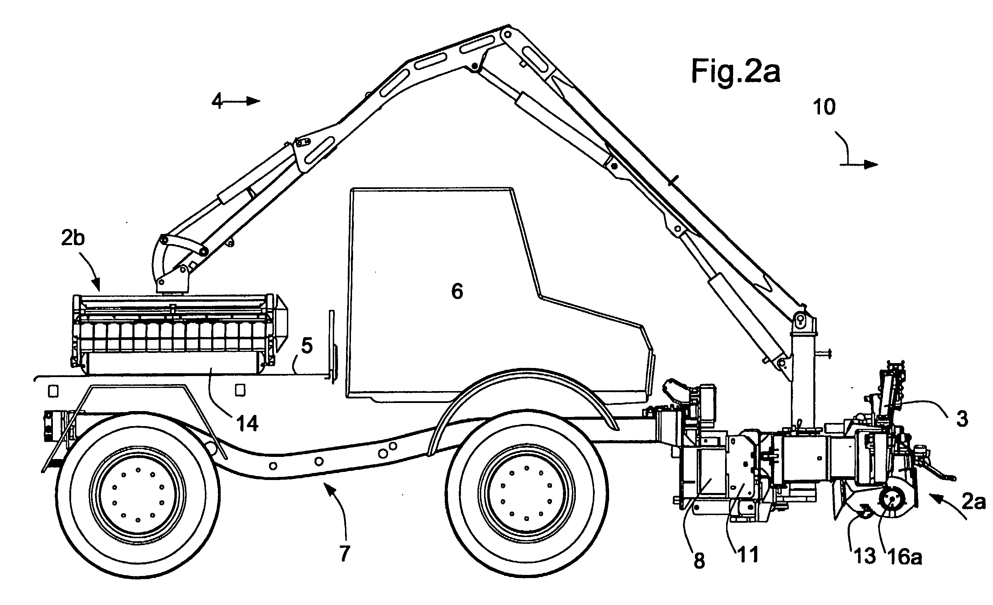

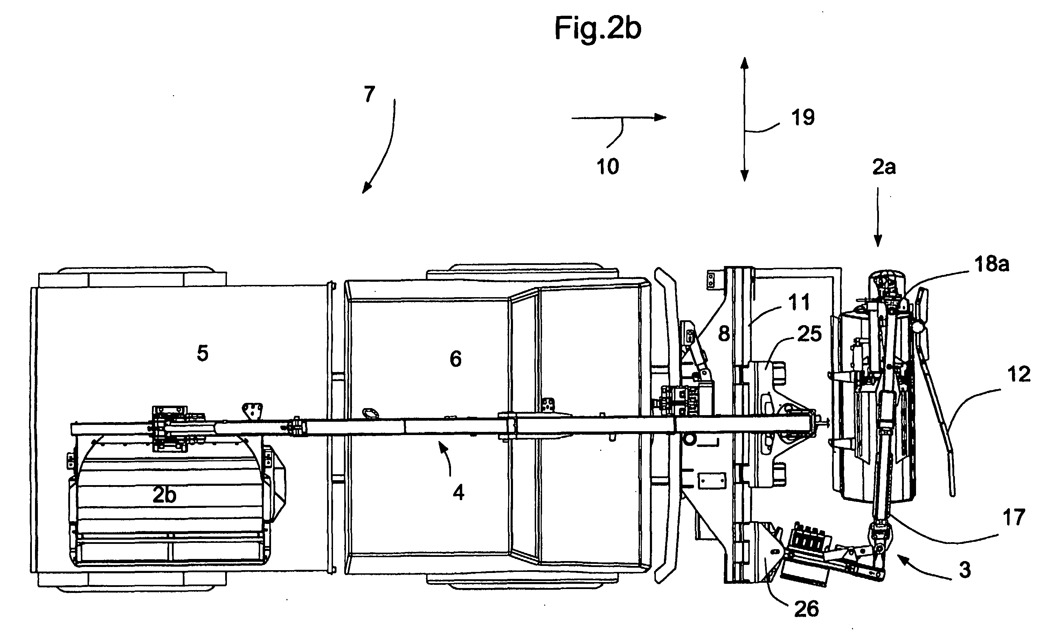

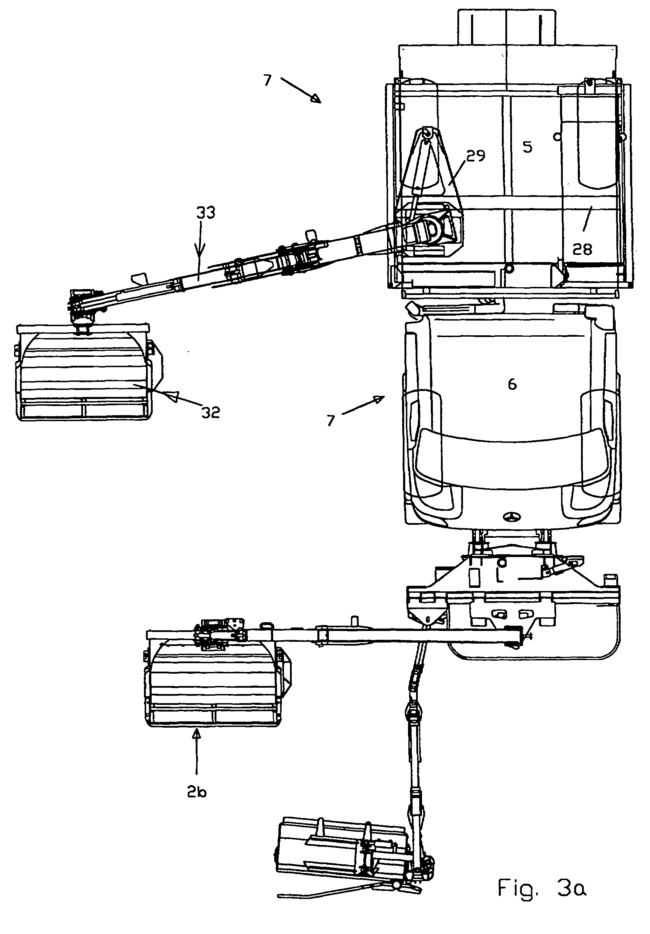

Die Figuren 2a und 2b zeigen das Mähgerät 1 in der für die vorliegende Erfindung wichtigeren Transportstellung: Der Befestigungsschuh 26, mit dessen Hilfe der Ausleger 3 des inneren Mähkopfes 2a fest an der Versatzschiene 11 befestigt ist, befindet sich nach wie vor in der äußersten rechten Position an der Versatzschiene 11. Der Verschiebeschuh 25, an dem der Auslegerarm 4 für den äußeren Mähkopf 2b befestigt ist, ist in der Transportstellung vorzugsweise in die Mittelstellung bzgl. der Versatzschiene 11 und damit der Fahrzeuges 7 gefahren, während in der Mähstellung der Figur 1a bzw. 1b außer der dort dargestellten Mittelstellung auch eine Positionierung am anderen, also vom Befestigungsschuh 23 abgewandten linken Ende der Versatzschiene zwecks besserer Gewichtsverteilung möglich ist, wenn dies die Länge des Auslegerarms 4 zulässt.

In der Transportstellung der Figuren 2a, 2b ist der äußere Mähkopf 2b auf der Ladefläche 5, die in der Regel hinter dem Fahrerhaus 6 des Fahrzeuges 7 angeordnet ist, abgelegt mit Ausrichtung der Mähwelle dieses Mähkopfes 2b vorzugsweise in Fahrtrichtung 10 und der Mitte oder auf einer Seite der Ladefläche. Die übrigen Bereiche verbleiben dann als frei verfügbare Ladefläche. Der Auslegerarm 4 erstreckt sich dabei ebenfalls vorzugsweise entgegen der Fahrtrichtung 10 verlaufend über die Mitte des Fahrerhauses hinweg von dem vorderen Frontrahmen 8 zum auf der hinteren Ladefläche 5 abgelegten Mähkopf 2b, an dessen Mitte der Ausleger 4 angreift.

Der innere Mähkopf 2a ist dagegen an einer hierfür vorgesehenen Halterung, die Bestandteil des Frontrahmens ist, so nahe wie möglich vor dem Frontrahmen 8 gehalten. Dabei ist ein gewisser Mindestabstand notwendig, der durch die frontseitige Auskragung des Verschiebeschuhs 25 vor der Frontschiene 11 bedingt wird. Der Auslegerarm 3 ist dabei hinsichtlich seines mittleren Abschnittes 17 eingefahren, und erstreckt sich zum Teil etwa in Fahrtrichtung 10 nach vorne und zum anderen Teil quer zur Fahrtrichtung ebenfalls vor der Frontschiene 11 und damit parallel oberhalb des Mähkopfes 2a, welcher mit der Erstreckung seiner Mähwelle ebenfalls quer, also im rechten Winkel 10, angeordnet ist, und dessen Anlenkpunkt 18a gegenüber dem freien vorderen Ende des Auslegerarmes 3 sich am linken Ende des Mähkopfes befindet. Damit liegt auch in dieser Transportstellung der Figuren 2 der innere Mähkopf 2a so vor dem Arbeitsfahrzeug 7, dass sich die Taststange 12 noch vor der Front dieses Mähkopfes 2a befindet, und auch in der Transportstellung nach wie vor aktiv sein könnte, als Sicherheitsmerkmal, jedoch nicht zum Umgehen eines Hindernisses.

Damit ist in der Transportstellung zum einen das Gewicht der beiden Mähköpfe 2a, 2b auf vorderes und hinteres Ende des Arbeitsfahrzeuges 7 verteilt, und zusätzlich der Schwerpunkt des inneren und in Transportstellung vorderen Mähkopfes 2a nahe vor der frontseitigen Versatzschiene 11 gelegen, und dieser vordere Mähkopf 2a kann vom Fahrer des Fahrzeuges 7 beim Transportieren noch gut eingesehen und mein Rangieren überblickt werden.

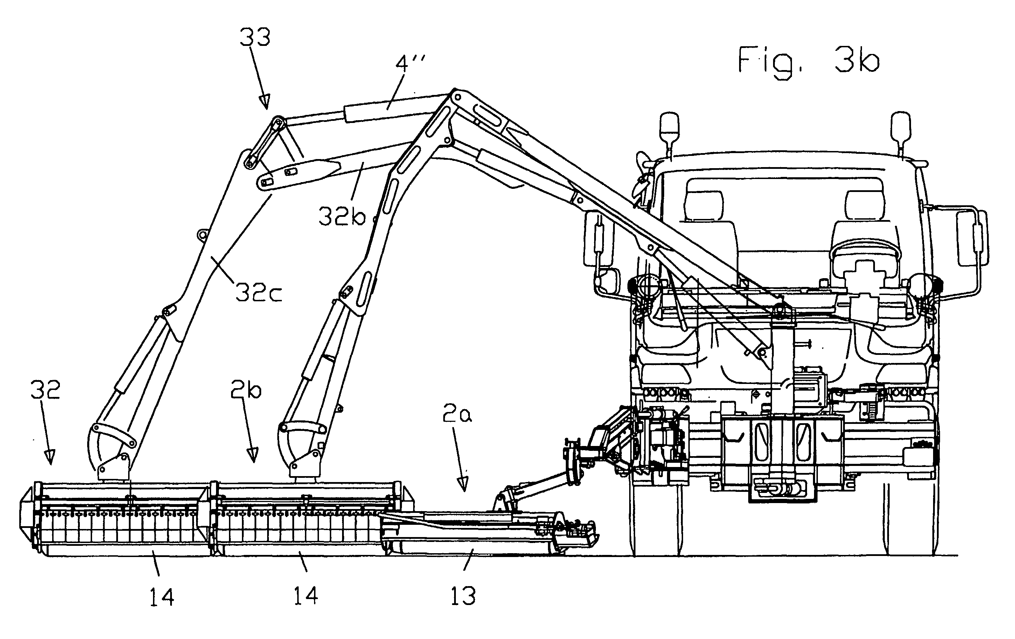

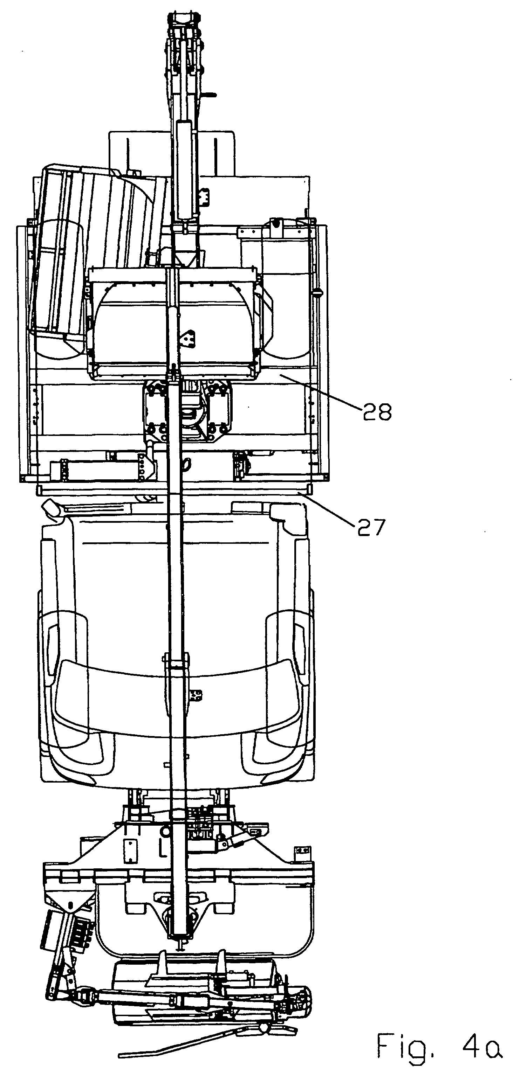

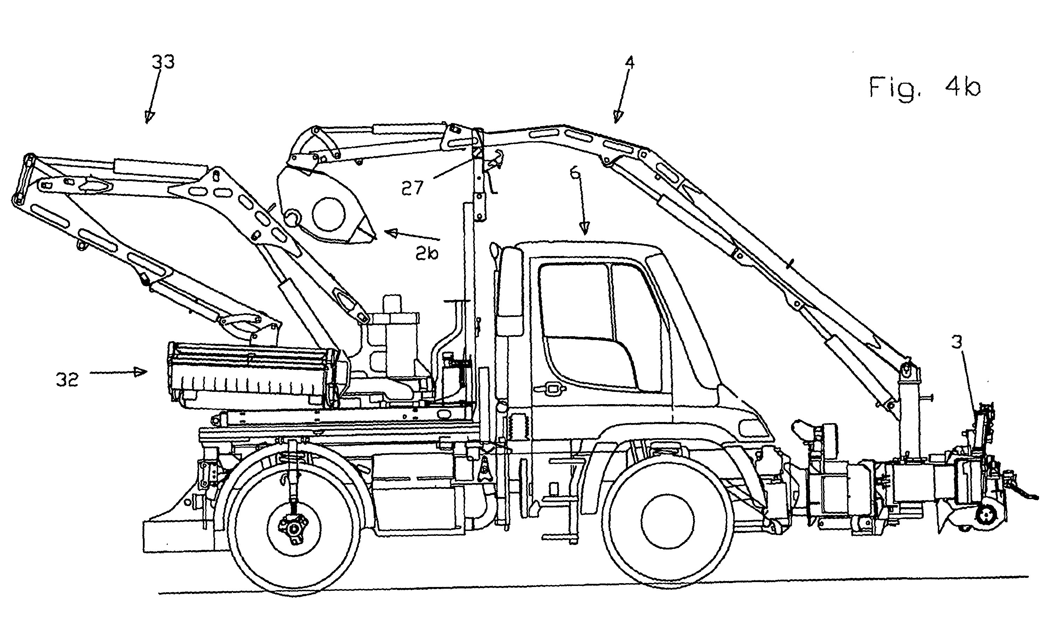

Die Figuren 3 und 4 zeigen ein Arbeitsfahrzeug mit einem Randstreifenmähgerät 1, welches insgesamt drei separate Mähköpfe 2a, 2b und 32 umfasst, von denen jeder an einem separaten Auslegerarm 3, 4 und 33 befestigt ist.

Das Fahrzeug unterscheidet sich von demjenigen der Figuren 1 und 2 nur durch die dritte Arbeitseinheit, also den Heck-Mähkopf 32, der an einem separaten Heck-Auslegerarm 33 befestigt ist, sowie einer anderen Ablageart des zweiten Mähkopfes 2b in der Transportstellung.

Wie die Figuren 3, 3a und 3b zeigen, wird im Arbeitseinsatz der dritte, Heck-Mähkopf 32 am weitesten außen, also vom Arbeitsfahrzeug 7 entfernt, zum Einsatz kommen, und in Fahrrichtung gesehen auch deutlich hinter den beiden anderen Mähköpfen 2a und 2b:

Wie Figur 3a zeigt, ist dieser Heck-Auslegerarm 33 dieses Heck-Mähkopfes 32 mittels einer Schiebebasis 29 entlang von Heck-Versatzschienen 28 in Querrichtung auf dem vorderen Teil der Ladefläche 5 des Fahrzeuges 7 angeordnet und zur Gewichtsaustarierung dort verschiebbar. Im Arbeitseinsatz wird die Schiebebasis 29 dabei - wenn rechts vom Fahrzeug gemäht werden soll - relativ weit rechts außen insbesondere am rechten Rand der Ladefläche 5 positioniert sein, um den Heck-Auslegerarm 33 so kurz wie möglich dimensionieren zu können. Dieser ragt in Arbeitsstellung fast im rechten Winkel von der Fahrtrichtung des Fahrzeuges aus zur Seite und nur leicht nach vorn, so daß sich der Heck-Mähkopf 32 in Fahrtrichtung betrachtet in Längsposition etwa der Fahrerkabine 6, insbesondere etwa des hinteren Bereichs der Fahrerkabine 6 befindet.

Die zweite und dritte Arbeitseinheit, also die beiden am weitesten außen arbeitenden Einheiten, ähneln sich stark, besitzen insbesondere den gleichen Mähkopf 2b, 32 und auch die Auslegerarme 4, 33 ähneln sich stark bzw. sind identisch.

Ein Unterschied kann darin bestehen, daß beim Heck-Auslegerarm 33 - wie am besten in Figur 3b ersichtlich - der Hydraulikkolben 4" zwischen den beiden Armteilen 32b und 32c, also dem vorletzten und letzten Armteil des Auslegerarmes, nicht auf der Unterseite, sondern auf der Oberseite, also außen auf dem Auslegerarm, angeordnet ist. Dies ist notwendig, da auch dieser Hydraulikkolben 4" auf der Innenseite stören würde, wenn in der Transportstellung - wie am besten in Figur 4b zu sehen - der äußerste Armteil 32c und der zweitäußerste Armteil 32b C-förmig eng aneinander geklappt werden. Die Figuren 4 zeigen die Transportstellung.

Wie Figur 4a erkennen läßt, liegt in der Transportstellung der dritte Mähkopf 32 auf der Ladefläche 5 in dessen äußeren Bereich und annähernd parallel zur Fahrtrichtung auf der Ladefläche oder über der Ladefläche 5 auf. Er befindet sich dabei neben dem - in der Seitenansicht der Figur 4 betrachteten - C-förmig eingeklappten Heck-Auslegerarm 33, der dabei immer noch heckseitig über die Ladefläche 5 hinaus steht, und zur besseren Gewichtsverteilung und um seitlich genug Platz für den abgelegten Heck-Mähkopf 32 zu schaffen etwas vom Mähkopf weg aus der Mitte der Ladefläche 5 heraus entlang der Heck-Versatzschiene 38 verfahren ist.

In dieser Transportstellung verläuft also der Heck-Auslegerarm 33 vom vorderen Bereich der Ladefläche aus - in der Seitenansicht betrachtet - schräg ansteigend nach hinten. In dem dadurch entstehenden Freiraum oberhalb der Heck-Versatzschiene, also oberhalb des vorderen bis mittleren Bereiches der Ladefläche 5 wird der zweite Mähkopf 2 in der Transportstellung positioniert, in dem dieser in Querlage zur Fahrtrichtung und unter das hintragende Ende des Auslegerarmes 4 eingeklappt in der Höhe etwa über der Mitte der Ladefläche 5 gehalten wird.

Dies wird ermöglicht, indem der Auslegerarm 4 - der sich in der Transportstellung etwa in Fahrzeuglängsmitte über die Fahrerkabine hinweg nach hinten erstreckt - auf einer Ablageschiene 27 abgelegt wird, die vorzugsweise über dem vorderen Ende der Ladefläche 5 oder über der Fahrerkabine 6 montiert ist und eine solche Höhe besitzt, daß der auf diese Weise abgelegte Mähkopf 2b nicht mit dem in Transportstellung befindlichen Heck-Ablagearm 33 kollidiert.

Zum Einnehmen der Transportstellung ist vorzugsweise ein festes Ablageprogramm derart programmiert, daß zunächst die auf dem Heck montierte dritte Mäheinheit in Transportstellung gebracht, und erst anschließend die zweite Mäheinheit mit dem zweiten Mähkopf 2b in Transportstellung abgelegt wird. Gleichzeitig oder auch erst anschließend kann das Einnehmen der Transportstellung der ersten Mäheinheit (Auslegerarm 3 mit Mähkopf 2a) vor der Frontschiene erfolgen, welches Analog zur Beschreibung der Figuren 1 und 2 erfolgt.

### BEZUGSZEICHENLISTE

- 1: Randstreifen-Mähgerät
- 2a,b: Mähkopf (innerer/äußerer)
- 3: Auslegerarm (2a)
- 4: Auslegerarm (2b)
- 5: Ladefläche
- 6: Fahrerkabine
- 7: Arbeitsfahrzeug
- 8: Frontrahmen
- 9: Befestigungspunkt
- 10: Fahrtrichtung
- 11: Versatzschiene
- 12: Taststange
- 13: Abtastwalze
- 14: Abtastwalze
- 16a,b: Mähwelle
- 17: teleskopierbarer Abschnitt
- 18: Anlenkpunkt
- 19: Querrichtung
- 20: Straße
- 21: Randstreifen
- 22: Straßen-Begrenzungspfosten
- 23: äußerer Punkt
- 24: Stoßstange
- 25: Verschiebeschuh
- 26: Befestigungsschuh
- 27: Ablagschiene
- 28: Heck-Versatzschiene
- 29: Schiebebasis

- 32: Heck-Mähkopf
- 33: Heck-Auslegerarm

## Patentansprüche

1. Arbeitsfahrzeug (7) mit einem Randstreifen-Mähgerät (1) mit wenigstens zwei seitlich zueinander und zum Arbeitsfahrzeug (7) versetzt vor der Fahrerkabine (6) arbeitenden Mähköpfen (2a, b ...),
**dadurch gekennzeichnet, dass**
der Auslegerarm (4) des weiter außen arbeitenden Mähkopfes (2b) so ausgelegt ist, dass in der Transportstellung ein Ablegen dieses äußeren Mähkopfes (2b) über, insbesondere auf der Ladefläche (5) des Arbeitsfahrzeuges (7) hinter der Fahrerkabine (6) möglich ist.

2. Arbeitsfahrzeug nach Anspruch 1,
**dadurch gekennzeichnet, dass**
sich in der Transportstellung der zweite Auslegerarm (4) des Mähkopfes (2b) über die Fahrerkabine (6) hinweg erstreckt und seitlich nicht über das Arbeitsfahrzeug (7) hinausragt, und insbesondere der zweite Auslegerarm (4) mittig, insbesondere ausschließlich mittig, am Mähkopf (2b) angesetzt ist.

3. Arbeitsfahrzeug nach einem der vorhergehenden Ansprüche,
**dadurch gekennzeichnet, dass**
der seitlich betrachtet am nächsten am Arbeitsfahrzeug (7) arbeitende Mähkopf (2a) hinsichtlich seiner rotierenden Mähelemente und/oder seines Gehäuses - quer zur Fahrtrichtung (10) betrachtet - einen kleineren, insbesondere nur halb so großen Durchmesser aufweist wie der weiter außen arbeitende Mähkopf (2b), und insbesondere die Drehzahl des ganz innen arbeitenden Mähkopfes (2b) größer, insbesondere wenigstens zweimal so groß wie die des weiter außen arbeitenden Mähkopfes (2a) ist, und insbesondere der wenigstens eine weiter außen arbeitende Mähkopf (2b) eine Breite quer zur Fahrtrichtung (10) besitzt, die mehr als 50% der Gesamtbreite des Arbeitsfahrzeuges beträgt.

4. Arbeitsfahrzeug nach einem der vorhergehenden Ansprüche,
**dadurch gekennzeichnet, dass**
der innen arbeitende Mähkopf (2a) als Mähelement eine Messerwelle mit entlang wenigstens einer Wendel angeordneten Messern aufweist.

5. Arbeitsfahrzeug nach einem der vorhergehenden Ansprüche,
**dadurch gekennzeichnet, dass**
das Randstreifen-Mähgerät (1) einen Frontrahmen (8) zur Befestigung an der Front des Arbeitsfahrzeuges (7) sowie eine vor diesem Frontrahmen (8) quer zur Fahrtrichtung (10) verlaufende Versatzschiene (11) umfaßt, entlang welcher der zweite Auslegerarm (4) des weiter außen arbeitenden Mähkopfes (2b) während des Arbeitseinsatzes quer zur Fahrtrichtung (10) verfahrbar ist, und insbesondere der erste Auslegerarm (3) des innen arbeitenden Mähkopfes (2a) an dem der Fahrerseite gegenüberliegenden, in der Regel rechten, Ende des Frontrahmens (8), insbesondere dessen Versatzschiene (11), ortsfest angeordnet ist.

6. Arbeitsfahrzeug nach einem der vorhergehenden Ansprüche,
**dadurch gekennzeichnet, dass**
der innen arbeitende Mähkopf (2a) in Arbeitsstellung so weit in Fahrtrichtung (10) vor dem weiter außen arbeitenden Mähkopf (2b) positioniert ist, dass ein Verschwenken des weiter innen arbeitenden Mähkopfes (2a) um den an seinem linken Ende angeordneten Befestigungspunkt (9) bezüglich seines ersten Auslegerarmes (3) nach hinten zwecks Umfahren von Hindernissen ohne Kollision mit dem äußeren Mähkopf (2b) möglich ist.

7. Arbeitsfahrzeug nach einem der vorhergehenden Ansprüche,
**dadurch gekennzeichnet, dass**
vor dem inneren Mähkopf (2a) eine Taststange (12) quer zur Fahrrichtung und verschwenkbar am Gehäuse des Mähkopfes (2a), insbesondere schwenkbar befestigt auf der Seite des Befestigungspunktes (9), angeordnet ist.

8. Arbeitsfahrzeug nach einem der vorhergehenden Ansprüche,
**dadurch gekennzeichnet, dass**
der erste Auslegerarm (3) in der Arbeitsstellung des zugeordneten Mähkopfes (2a) parallel zur Fahrtrichtung (10) vom äußeren Rand des Frontrahmens (8), insbesondere von dessen Versatzschiene (11) und damit des Arbeitsfahrzeuges (7), aus gerade nach vorne verläuft, und insbesondere der erste Auslegerarm (3) einen parallelogrammartigen oder teleskopierbaren Abschnitt (3') aufweist.

9. Arbeitsfahrzeug nach einem der vorhergehenden Ansprüche,
**dadurch gekennzeichnet, dass**
der erste Auslegerarm (3) des inneren Mähkopfes (2a) so ausgebildet ist, dass der innere Mähkopf (2a) in Transportstellung parallel vor der Versatzschiene (11) angeordnet, und insbesondere in der Transportstellung mit seinem freien Ende auf der Fahrerseite auf einer Ablage des Mähgerätes (1), die insbesondere Teil der Befestigung des zweiten Auslegerarmes (4) des äußeren Mähkopfes (2b) an der Versatzschiene (11) ist, ablegbar ist, insbesondere so, daß dessen Taststange (12) vor dem Gehäuse des Mähkopfes (2a) angeordnet ist.

10. Arbeitsfahrzeug nach einem der vorhergehenden Ansprüche,
**dadurch gekennzeichnet, dass**
die beiden oder drei Mähköpfe (2a, b ...) unabhängig voneinander, insbesondere automatisch oder wahlweise manuell, hinsichtlich ihres Seitenversatzes und/oder ihrer Längsposition vor dem Frontrahmen (8) und damit auch hinsichtlich ihrer seitlichen Überlappung steuerbar sind, und insbesondere wenigstens ein Mähkopf, insbesondere der nicht innen arbeitende Mähkopf (2b), einen Sensor zur Abtastung der Form des Untergrundes, insbesondere mittels einer Abtastwalze (14, 13), insbesondere eine nachlaufende, zwecks automatischer Höhen- bzw. Neigungseinstellung des Mähkopfes (2b) aufweist.

11. Arbeitsfahrzeug nach einem der vorhergehenden Ansprüche,
**dadurch gekennzeichnet, dass**
der Auslegerarm (4) des außen arbeitenden Mähkopfes (2b) in der Transportstellung hinsichtlich seiner Querposition an der Versatzschiene (11) des Frontrahmens (8) vom Fahrer unter Berücksichtigung ausreichender Sicht für den Fahrer auf die Fahrbahn positionierbar, insbesondere im mittleren Bereich positionierbar, ist, unter insbesondere automatischer Beibehaltung der gleichen, insbesondere mittigen, Ablageposition des Mähkopfes (2b) auf der in Querrichtung mittigen Position der Ladefläche (5).

12. Arbeitsfahrzeug nach einem der vorhergehenden Ansprüche,
**dadurch gekennzeichnet, dass**
bei (3), jeweils an einem Auslegerarm (3, 4, 33) angeordneten Mähköpfen (2a,b, 32) ein Auslegerarm als Heck-Auslegerarm (33) ausgebildet ist und auf der Ladefläche (5) und/oder einer hinter der Ladefläche angeordneten Heckschiene des Arbeitsfahrzeuges (7) angebaut ist.

13. Arbeitsfahrzeug nach Anspruch 12,
**dadurch gekennzeichnet, dass**
der Heck-Mähkopf (32) des Heck-Auslegerarms (33) der am Arbeitseinsatz am weitesten außen, also seitlich zum Arbeitsfahrzeug (7) beabstandete, Mähkopf ist.

14. Arbeitsfahrzeug nach einem der vorhergehenden Ansprüche 12-13,
**dadurch gekennzeichnet, dass**
der im Arbeitseinsatz mittlere Mähkopf (2b) und ganz außen arbeitende Heck-Mähkopf (32) identisch ausgebildet sind.

15. Arbeitsfahrzeug nach einem der vorhergehenden Ansprüche 12-14,
**dadurch gekennzeichnet, dass**
der Heck-Auslegerarm (33) auf einer Schiebebasis (29) befestigt ist, die in Querrichtung des Arbeitsfahrzeuges (7) entlang einer Heck-Versatzschiene (28) verfahrbar ist.

16. Arbeitsfahrzeug nach einem der vorhergehenden Ansprüche 12-15,
**dadurch gekennzeichnet, dass**
in der Transportstellung der mittlere Mähkopf (2b) im Abstand über der Ladefläche (5) angeordnet ist, in dem der zugehörige zweite Auslegerarm (4) auf einer Ablageschiene (27), die in Querrichtung verlaufend über dem vorderen Endbereich der Ladefläche (5) in einer Höhe oberhalb des oberen Endes der Fahrerkabine (6) angeordnet ist, aufliegt und insbesondere dabei der Mähkopf (2b) nach vorne weisend unter das freie Ende seines zweiten Auslegerarmes (4) geklappt ist.

17. Arbeitsfahrzeug nach einem der vorhergehenden Ansprüche 12-16,
**dadurch gekennzeichnet, dass**
in der Transportstellung der Heck-Mähkopf (32) seitlich neben dem eingeklappten Heck-Auslegerarm (33) oberhalb, insbesondere auf, der Ladefläche (5), insbesondere in Längsrichtung verlaufend, angeordnet ist oder in Querrichtung verlaufend hinter dem hinteren Ende der Ladefläche (5) angeordnet ist.

18. Arbeitsfahrzeug nach einem der vorhergehenden Ansprüche 12-17,
**dadurch gekennzeichnet, dass**
in der Transportstellung der Heck-Auslegerarm (33) von der Längsmitte aus etwas versetzt, von dem abgelegten Heck-Mähkopf (32) weg versetzt, zur Gewichtsverteilung entlang der Heck-Versatzschiene (28) verfahren ist.

19. Arbeitsfahrzeug nach einem der vorhergehenden Ansprüche 12-18,
**dadurch gekennzeichnet, dass**
in der Transportstellung der Heck-Auslegerarm (33) von seiner Schiebebasis (29) aus nach hinten verlaufend unter in Transportstellung befindlichen mittleren Mähkopf (2b) hindurch verläuft.

## Claims

1. Working vehicle (7) with a shoulder mowing aggregate (1) with at least two mowing heads (2a, b ...) displaced each other and in respect of the working vehicle (7), and which operate in front of the driver's cabin (6), **characterized in that** the console arm (4) of the mowing head (2b) which operates at the most exterior area is thus conceived that in the transport position there is possible a laying of this exterior mowing head (2b) over, in particular on the loading platform (5) of the working vehicle (7), in the back of the driver's cabin (6).

2. Working vehicle according to claim 1, **characterized in that** in the transport position the second console arm (4) of the mowing head (2b) is extending over the driver's cabin (6) and does not project laterally over the working vehicle (7), and in particular the second console arm (4) is centrally attached, in particular exclusively centrally, to the mowing head (2b).

3. Working vehicle according to one of the preceding claims, **characterized in that** when laterally seen, the mowing head (2a) operating nearest to the working vehicle (7), as to the rotating mowing elements and/or its casing - as transversely seen in respect of the movement direction (10) - has a smaller diameter, in particular but half of that of the more exteriorly operating mowing head (2b), and in particular the number of rotations of the more interiorly operating mowing head (2a) is greater, in particular at least twice greater than that of the more exteriorly operating mowing head (2b), and in particular that at least one more exteriorly operating mowing head (2b) has a transverse width in respect of the movement direction (10) which is more than 50% of the total width of the working vehicle.

4. Working vehicle according to one of the preceding claims, **characterized in that** the mowing head (2a) interiorly operating as mowing element has a cutter spindle with cutters arranged along at least one spiral.

5. Working vehicle according to one of the preceding claims, **characterized in that** the shoulder mowing aggregate (1) comprises a frontal frame (8) for attaching to the front side of the working vehicle (7) as well as a shifting rail (11) transversely extending in respect of the movement direction (10) in front of this frontal frame (8), along which the second console arm (4) of the more exteriorly operating mowing head (2b) can be transversely shifted in respect of the movement direction (10) during employing, and in particular the first console arm (3) of the more interiorly operating mowing head (2a) is fixedly arranged on the opposite end in respect of the driver's side, as a rule the right one of the frontal frame (8), in particular of its shifting rail (11).

6. Working vehicle according to one of the preceding claims, **characterized in that** in the working position the more interiorly operating mowing head (2a) is positioned in the movement direction (10) so far in front of the more exteriorly operating mowing head (2b) that there is still possible a slewing of the more interiorly operating mowing head (2a) around the attachment point (9) arranged at its left end, backwards in respect of its first console arm (3), to the end of avoiding obstacles without hitting the exterior mowing head (2b).

7. Working vehicle according to one of the preceding claims, **characterized in that** in front of the interior mowing head (2a), on the casing of the mowing head (2a) there is arranged a probing rod (12), transversely in respect of the movement direction and having the possibility of being slewed, in particular slewingly attached on the side of the attachment point (9).

8. Working vehicle according to one of the preceding claims, **characterized in that** in the working position the first console arm (3) of the related mowing head (2a) is extending in parallel to the movement direction (10), directly forwards from the exterior edge of the frontal frame (8), in particular from its shifting rail (11), and thereby of the working vehicle (7), and in particular the first console arm (3) has a parallelogram or telescopic like segment (3').

9. Working vehicle according to one of the preceding claims, **characterized in that** the first console arm (3) of the interior mowing head (2a) is thus conceived that in the transport position the interior mowing head (2a) is parallelly arranged in front of the shifting rail (11), and in particular in the transport position can be laid with its free end on the driver's side on a support of the mowing aggregate (1), which in particular is part of the attachment to the shifting rail (11) of the second console arm (4) of the exterior mowing head (2b), in particular thus that its probing rod (12) be arranged in front of the casing of the mowing head (2a).

10. Working vehicle according to one of the preceding claims, **characterized in that** those two or three mowing heads (2a, 2b ...) can be independently controlled each other, in particular automatically or optionally manually, as to their lateral displacement and/or their longitudinal position in front of the frontal frame (8) and thereby as to their lateral superposing too, and in particular at least one mowing head, in particular the non-interiorly operating mowing head (2b), has a sensor to probe the ground shape, in particular by means of a probing drum (14, 13) in particular a following one, to the end of an automatic setting of the height and the canting of the mowing head (2b) respectively.

11. Working vehicle according to one of the preceding claims, **characterized in that** the console arm (4) of the exteriorly operating mowing head (2b), in the transport position, as to its transverse position on the shifting rail (11) of the frontal frame (8), can be positioned by the driver to the end of obtaining a good visibility of the driver over the road, in particular it can be positioned in the median area, in particular by automatically maintaining the same, in particular central, laying position of the mowing head (2b) on the transverse central position of the loading platform (5).

12. Working vehicle according to one of the preceding claims, **characterized in that** on the mowing heads (2a,b, 32) arranged on a console arm (3, 4, 33), one of the console arms is conceived as a rear console arm (33) and is mounted on the loading platform (5) and/or on a rear rail of the working vehicle (7) arranged in the back of the loading platform.

13. Working vehicle according to claim 12, **characterized in that** the rear mowing head (32) of the rear console arm (33) is the most exteriorly operating mowing head, therefore laterally spaced in respect of the working vehicle (7).

14. Working vehicle according to one of the claims 12-13, **characterized in that** the centrally operating mowing head (2b) and the most exteriorly operating mowing head (32) are identically conceived.

15. Working vehicle according to one of the preceding claims 12-14, **characterized in that** the rear console arm (33) is attached to a gliding base (29) which can be shifted in the transverse direction of the working vehicle (7) along a rear-shifting rail (28).

16. Working vehicle according to one of the preceding claims 12-15, **characterized in that** in the transport position the central mowing head (2b) is arranged at distance over the loading platform (5) **in that** the second related console arm (4) is laid on a laying rail (27) arranged at distance vertically over the superior end of the driver's cabin (6), rail transversely extending over the front marginal area of the loading platform (5), and in particular here the mowing head (2b) is folded forwards under the free end of the second console arm (4) it is attached to.

17. Working vehicle according to one of the preceding claims 12-16, **characterized in that** in the transport position the rear mowing head (32) is laterally arranged next to the folded rear console arm (33), in particular on the loading platform (5), in particular extending in the longitudinal direction, or is arranged extended in the transverse direction in the back of the rear end of the loading platform (5).

18. Working vehicle according to one of the preceding claims 12-17, **characterized in that** in the transport position the rear console arm (33) is shifted along the rear shifting rail (28), slightly displaced in respect of the longitudinal middle, displaced in respect of the rear mowing head (32), for a better weight distribution.

19. Working vehicle according to one of the preceding claims 12-18, **characterized in that** in the transport position the rear console arm (33) is extending backwards from its gliding base (29), under the central mowing head (2b) which is in the transport position.

## Revendications

1. Véhicule de travail (7) avec un appareil de fauchage pour les bandes marginales (1) avec au moins deux têtes de fauchage (2a,b ...) décalées latéralement l'une de l'autre et aussi par rapport au véhicule de travail (7) et qui actionnent devant la cabine de conduite (6), **caractérisé en ce que**, le bras-console (4) de la tête de fauchage (2b) qui actionne le plus extérieurement est conçu de sorte que, dans la position de transport soit possible une position de cette tête de fauchage extérieure (2b) au-dessus de, spécialement sur la plate-forme de chargement (5) du véhicule de travail (7), derrière la cabine de conduite (6).

2. Véhicule de travail de la revendication 1, **caractérisé en ce que**, dans la position de transport le deuxième bras-console (4) de la tête de fauchage (2b) s'étend au-dessus de la cabine de conduite (6) et celui-ci ne sort pas latéralement en dehors du véhicule de travail (7) et spécialement le deuxième bras-console (4) est fixé centralement, spécialement dans un mode exclusif-central de la tête de fauchage (2b).

3. Véhicule de travail selon l'une des revendications antérieures, **caractérisé en ce que**, vu de la direction latérale, la tête de fauchage (2a) qui actionne la plus proche du véhicule de travail (7) en ce qui concerne les éléments de fauchage rotatifs et/ou la carcasse de celle-ci regardée transversalement par rapport à la direction de marche (10) - présente un diamètre plus petit, spécialement à moitié comparé au diamètre de la tête de fauchage (2b) qui actionne plus extérieurement et spécialement le nombre de rotations de la tête de fauchage (2a) qui actionne à l'intérieur est plus grand et spécialement au moins deux fois plus grand que celui de la tête de fauchage (2b) qui actionne plus extérieurement et spécialement cette au moins une tête de fauchage (2b) qui actionne plus extérieurement présente une largeur transversale par rapport à la direction de marche (10) qui est plus grande de 50% de la largeur totale du véhicule de travail.

4. Véhicule de travail selon l'une des revendications antérieures, **caractérisé en ce que**, la tête de fauchage (2a) qui actionne à l'intérieur comme élément de fauchage présente un axe port-outil à outils disposés au long au moins d'une spirale.

5. Véhicule de travail selon l'une des revendications antérieures, **caractérisé en ce que**, l'appareil de fauchage pour bandes marginales (1) comprend un cadre frontal (8) pour fixation de la part frontale du véhicule de travail (7) aussi bien qu'un rail de déplacement (11) déroulé transversalement par rapport à la direction de marche (10) devant ce cadre frontal (8) au long duquel le deuxième bras-console (4) de la tête de fauchage (2b) qui actionne plus extérieurement peut être déplacé transversalement par rapport à la direction de marche (10) pendant l'utilisation et spécialement le premier bras-console (3) de la tête de fauchage (2a) qui actionne à l'intérieur est disposé dans un mode fixe sur la part opposée par rapport à la part du chauffeur, de règle la part droite du cadre frontal (8), spécialement du rail de déplacement (11) de celui-ci.

6. Véhicule de travail selon l'une des revendications antérieures, **caractérisé en ce que**, dans la position de travail, la tête de fauchage (2a) qui actionne à l'intérieur est positionnée dans la direction de marche (10) si loin devant la tête de fauchage (2b) qui actionne plus extérieurement, qu'il est possible une pivotation de la tête de fauchage (2a) qui actionne plus intérieurement autour le point de fixation (9) disposé à son extrémité gauche vers en arrière par rapport au premier bras-console (3) de celle-ci dans le but d'éviter les obstacles sans se frapper de la tête de fauchage extérieure (2b).

7. Véhicule de travail selon l'une des revendications antérieures, **caractérisé en ce que**, devant la tête de fauchage intérieure (2a) sur la carcasse de la tête de fauchage (2a) est disposée une tige de palpation (12), transversalement par rapport à la direction de marche et avec la possibilité de pivotation, spécialement fixée de manière pivotante sur la part du point de fixation (9).

8. Véhicule de travail selon l'une des revendications antérieures, **caractérisé en ce que**, dans la position de travail le premier bras-console (3) de la tête de fauchage (2a) se déroule parallèlement par rapport à la direction de marche (10) directement vers en avant à partir du bord extérieur du cadre frontal (8), spécialement du rail de déplacement (11) de celui-ci et par cela du véhicule de travail (7) et spécialement le premier bras-console (3) présente un segment (3') en forme de parallélogramme ou télescopique.

9. Véhicule de travail selon l'une des revendications antérieures, **caractérisé en ce que**, le premier bras-console (3) de la tête de fauchage intérieure (2a) est disposé parallèlement devant le rail de déplacement (11) et spécialement en position de transport celui-ci peut être assis avec son extrémité libre sur la part du chauffeur sur un support de l'appareil de fauchage (1) qui spécialement constitue une part de fixation du rail de déplacement (11) du deuxième bras-console (4) de la tête de fauchage extérieure (2b), spécialement de sorte que la tige de palpation (12) de celle-ci soit disposée devant la carcasse de la tête de fauchage (2a).

10. Véhicule de travail selon l'une des revendications antérieures, **caractérisé en ce que**, les deux ou trois têtes de fauchage (2a, b...) peuvent être commandées indépendamment l'une de l'autre, spécialement dans un mode automatique ou au choix manuel, en ce qui concerne le décalage latéral de celles-ci et/ou la position longitudinale de celles-ci devant le cadre frontal (8) et par cela aussi en ce qui concerne la superposition latérale de celles-ci et spécialement au moins une tête de fauchage, spécialement la tête de fauchage (2b) qui n'actionne pas à l'intérieur présente un senseur pour l'exploration de la forme du sol, spécialement par l'intermédiaire d'un tambour d'exploration (14, 13), spécialement de poursuite dans le but d'un réglage automatique de l'hauteur respectivement de l'inclinaison de la tête de fauchage (2b).

11. Véhicule de travail selon l'une des revendications antérieures, **caractérisé en ce que**, le bras-console (4) de la tête de fauchage (2b) qui actionne à l'extérieur en position de transport en ce qui concerne sa position transversale sur le rail de déplacement (11) du cadre frontal (8), celui-ci peut être positionné par le chauffeur dans le but d'obtenir une suffisante visibilité sur la route, spécialement celui-ci peut être positionné dans la zone médiane, spécialement par le maintien automatique de la même position de fixation de la tête de fauchage (2b), spécialement centrale dans la direction transversale de la plate-forme de chargement (5).

12. Véhicule de travail selon l'une des revendications antérieures, **caractérisé en ce qu'**au bras console (3), aux têtes de fauchage (2a, b; 32) disposées chacune sur un bras-console (3, 4, 33) l'un d'entre les bras-console est conçu comme un bras-console postérieur (33) et celui-ci est monté sur la plate-forme de chargement (5) et/ou sur un rail postérieur du véhicule de transport (7) disposé en arrière de la plate-forme de chargement.

13. Véhicule de travail selon la revendication 12, **caractérisé en ce que**, la tête de fauchage postérieure (32) du bras-console postérieur (32) est la tête de fauchage qui pendant l'utilisation est plus extérieurement, donc distancée latéralement par rapport au véhicule de travail (7).

14. Véhicule de travail selon l'une des revendications antérieures 12, 13, **caractérisé en ce que**, la tête de fauchage centrale (2b) pendant l'utilisation et la tête de fauchage (32) qui actionne la plus extérieurement sont identiques.

15. Véhicule de travail selon l'une des revendications antérieures 12 à 14, **caractérisé en ce que**, le bras-console postérieur (33) est fixé sur une plaque coulissante (29), déplaçable dans la direction transversale du véhicule de travail (7) au long d'un rail de déplacement postérieur (28).

16. Véhicule de travail selon l'une des revendications antérieures 12 à 15, **caractérisé en ce que**, dans la position de transport la tête de fauchage (2b) est disposée à distance sur la plate-forme de chargement (5) par le fait que le deuxième bras-console (4), afférent est assis sur un rail de position (27) qui est disposé à l'hauteur au-dessus de l'extrémité supérieure de la cabine de conduite (6), déroulée transversalement au-dessus de la zone périphérique avant de la plate-forme de chargement (5) et spécialement ici la tête de fauchage (2b) est orientée vers en avant sous le bout libre du bras-console (4), le deuxième de celui-ci

17. Véhicule de travail selon l'une des revendications antérieures 12 à 16, **caractérisé en ce que**, dans la position de transport, la tête de fauchage postérieure (32) est disposée latéralement près du bras-console postérieur 33 fixé spécialement de la plate- forme de chargement (5), spécialement déroulé dans la direction longitudinale ou est disposé déroulé dans la direction transversale, derrière de l'extrémité postérieure de la plate-forme de chargement (5).

18. Véhicule de travail selon l'une des revendications antérieures 12 à 17, **caractérisé en ce que**, dans la position de transport le bras-console postérieur (33) au long du rail de déplacement postérieur (28) décalé un peu par rapport au milieu longitudinal, décalé par rapport à la tête de fauchage postérieure (32) pour la distribution du poids.

19. Véhicule de travail selon l'une des revendications antérieures 12 à 18, **caractérisé en ce que**, dans la position de transport le bras-console postérieur (33) se déroule vers en arrière du côté de la plaque coulissante (29) de celui-ci, sous la tête de fauchage (2b) trouvée centralement en position de transport.
